# EUROPEAN PATENT SPECIFICATION

(11) **EP 4 494 810 B1**
(45) Date of publication and mention of the grant of the patent: **29.10.2025**
(21) Application number: 23186898.5
(22) Date of filing: 21.07.2023
(51) Int. Cl.: B23Q 17/09

(54) **SENSOR-ENHANCED WEARABLE PART FOR TOOL SYSTEMS AND METHODS FOR DATA-DRIVEN OPTIMIZATION**
SENSORBESTÜCKTES VERSCHLEISSTEIL FÜR WERKZEUGSYSTEME UND VERFAHREN ZUR DATENGESTÜTZTEN OPTIMIERUNG
PIÈCE PORTABLE AMÉLIORÉE PAR CAPTEUR POUR SYSTÈMES D'OUTILS ET MÉTHODES D OPTIMISATION PILOTÉE PAR DONNÉES

(43) Date of publication of application: 22.01.2025
(73) Proprietor: lifiot UG (haftungsbeschränkt), 78048 Villingen-Schwenningen (DE)
(72) Inventor: Halim, Mirveys, 78048 Villingen-Schwenningen (DE)
(74) Representative: Meyer zu Bexten, Elmar

(56) References cited:
- WO-A1-2018/095472
- WO-A1-2022/136092
- WO-A1-2023/069283
- US-A1- 2021 402 539
- US-A1- 2022 268 146

## Description

### Technical Field

The present invention is in the field of tool systems and wearable parts designed for machining operations. Within this context, the term "machining", while typically applied to metal, encompasses the treatment of mineral-based or composite materials such as concrete or asphalt. Specifically, the invention relates to sensors integrated into wearable parts and their communication with permanent parts to monitor attach-rate usage, avoid counterfeiting, avoid counteroptimize performance, enable data-driven decision-making, and enhance overall efficiency in various industrial and construction applications.

### Background Art

Tool systems, such as those used in drilling, cutting, or grinding/polishing operations, often consist of wearable parts that require periodic replacement due to wear and tear. Each of WO 2023/069283 A1, US 2022/268146 A1, WO 2018/095472 A1, US 2021/402539 A1, and WO 2022/136092 A1 discloses such system as per the preamble of claim 1. These wearable parts, such as core bits, drilling bits, grinding discs, or saw blades, undergo significant stresses and forces during operation, leading to deterioration over time. It is beneficial to monitor their condition, detect wear, and optimize working parameters to ensure efficient and precise machining.

In the prior art, various techniques have been proposed for monitoring wearable parts, such as visual inspection or manual measurements. However, these methods are often time-consuming, require human intervention, and may not provide real-time or comprehensive data. Moreover, optimizing working parameters based on the condition of the wearable part has remained a challenge.

### Summary of Invention

The invention is defined in claim 1.

In one embodiment, the sensor includes means for enabling IoT capabilities in the wearable part. This allows the wearable part to connect and communicate with IoT networks, facilitating advanced data transmission, analysis, and integration with other systems.

In another embodiment, the sensor incorporates an energy harvesting unit. This energy harvesting unit enables the sensor to harness energy from its surroundings, ensuring self-sustained power supply for the sensor.

In yet another embodiment, the sensor specifically harvests energy from kinetic energy, vibrations, or thermal sources present during tool system operation.

In a further embodiment, the sensor includes a piezoelectric element or an electromagnetic inductor, enabling efficient energy harvesting from vibrations.

In a preferred embodiment, the sensor is designed with a ring or curved shape, providing flexibility in its application and attachment to the wearable part. Additionally, the sensor may have an adjustable diameter, allowing it to be adapted to different wearable part designs if necessary.

The permanent part of the tool system is an electric, hydraulic, or pneumatic tool or machine, such as a coring machine, and may drive the wearable part. This configuration allows for seamless integration and communication between the wearable part and the permanent part, enhancing the overall functionality and performance of the tool system.

The wearable part includes a variety of tool types, such as a drilling bit, core bit, grinding disc, saw blade, or other cutting tool. This versatility allows the sensor-enabled wearable part to be employed in a wide range of machining operations.

In a specific application, the wearable part is a core bit designed for drilling operations. The sensor is positioned in one of several possible locations, including inside the barrel of the core bit, around the transition part of the core bit, in the shank, in the top (cover) of the barrel, or at the bottom of the steel barrel cover. This placement enables accurate data collection and monitoring of various parameters related to the core bit's performance and condition.

It is well understood that the tool system may comprise various additional components, for instance, a coring rig or stand, water supply and slurry recycling units, and generator or other power source.

A method for transmitting data within the tool system is suggested which involves the wearable part comprising the sensor as specified. The data collected or measured by the sensor is transmitted to the permanent part of the tool system. This data transmission ensures efficient communication and enables informed decision-making based on real-time information.

In one embodiment, a central instance verifies the availability and completeness of wearable parts and permanent parts required for a specific application. This central instance acts as a monitoring entity, ensuring that all necessary components are available and complete for a specific operation.

In another embodiment, the permanent part of the tool system adjusts working parameters automatically based on the data received from the wearable part. This enables dynamic optimization and adaptation of the tool system to achieve optimal performance.

In yet another embodiment, the wearable part transmits authentication data to the permanent part for verification. The permanent part tracks the duration of authenticated wearable part usage and, alternatively or additionally, determines a ratio of authenticated and non-authenticated wearable part usage.

In a specific embodiment, the determination of authenticated and non-authenticated wearable part usage is performed through periodic analysis of the data collected by the sensor or triggered upon coupling or decoupling of the wearable part. This periodic analysis or event-based monitoring ensures accurate tracking and monitoring of wearable part usage, facilitating effective management and maintenance of the tool system.

In a particular embodiment, the sensor integrated into the wearable part is designed to detect various parameters, including wear, stress, misuse, water contact or flow, rotational speed, and (angular) velocity or acceleration. By continuously monitoring these parameters, the sensor provides valuable insights into the performance and condition of the wearable part. This information can be utilized to optimize machining operations, ensure proper maintenance, and enhance the longevity and efficiency of the tool system.

### Brief Description of Drawings

Figure 1 illustrates a drilling system;
Figure 2 illustrates a core bit with a sensor at the welded transition part between the shaft and actual barrel;
Figure 3 illustrates a core bit with a sensor at the bottom of the barrel top/cover;
Figure 4 illustrates a core bit with a sensor in the shank;
Figure 5 illustrates a sensor embedded in the barrel top/cover;
Figure 6 illustrates a sensor with its components.

Reference will now be made in detail to exemplary embodiments of the invention, which are illustrated in the accompanying drawings. Wherever possible, the same reference numbers will be used throughout the drawings to refer to the same or like parts.

In the figures the example of a core bore bit and an according drilling system is illustrated, as are the embodiments described. The teaching is to be adapted vice versa to other examples of wearable parts and permanent parts.

### Fig.1

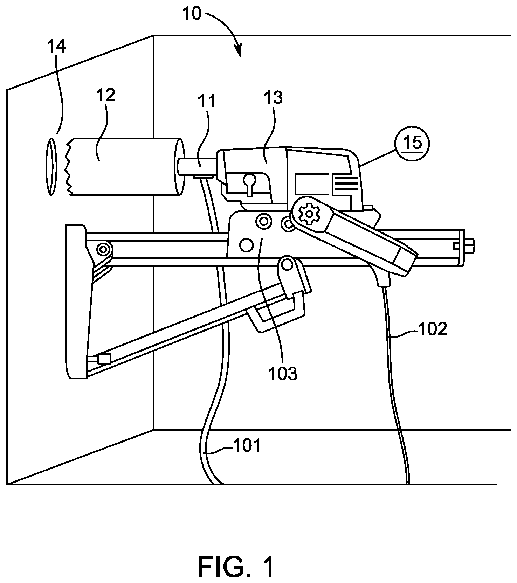

A drilling system as illustrated in figure 1 is an example of the claimed tool system 10. It comprises a diamond core bit, which relates to the wearable part 12 of the tool, which is fitted onto a coring machine, which relates to the permanent part 13 of the tool. A sensor 11 is attached or part of the wearable part 12.

As the core bit cuts into the workpiece 14, which relates to the substrate, for example into concrete, it creates a core (cylindrical piece), that can be removed from the hole. It is typically used to drill holes (cores) from 8 to 1000 mm.

A diamond coring machine typically consists of a motor that drives a spindle, to which the diamond core bit is attached. The motor can be electric or hydraulic but mostly electric, and it provides the power to rotate the core bit.

Many diamond coring machines come with different gears for drilling holes of different sizes. The gear sets control the speed and torque of the drill bit, allowing the machine to drill holes of varying diameters with better efficiency. Some machines also have adjustable clutches or slip-clutch mechanisms that help to prevent the drill bit from over-torquing and breaking when it encounters areas of hard aggregate or reinforcement in the concrete.

These machines typically come in two main types: handheld and rig-mounted: Handheld diamond coring machines are easier to move (lesser weight and smaller) and can be used for drilling holes in walls, floors, and ceilings. They are typically less powerful than rig-mounted diamond coring machines.

On the other hand, rig-mounted diamond coring machines are used for drilling large-diameter holes in floors and walls, and they are typically larger and more powerful than handheld machines. They are mounted on a rig and are used in conjunction. In some rare cases, rig-mounted coring machines can be also used for ceilings (overhead) if the machine has a sufficient IP-rating (water-resistance indicator) and/or additional measures are taken care off.

The depicted tool system 10 further comprises secondary parts, necessary to fulfill the task as a drilling machine, in particular a water hose 101, a power cord 102 and a drill-rig 103. A central instance 15, which optionally can be implemented or part of the permanent part 13, can ensure that a tool system 10 for a particular application is complete for worksite mobilization. This is possible by assessing the data from all parts, containing proximity information and checking completeness. Any missing part would lead to failure of the application execution.

### Fig.2

The following figures show examples on where and how to mount the sensor 11 onto the wearable part 12, in the example of a core drilling bit.

For positioning the sensor, the following should be taken into consideration and the suggested solutions may bring about some of the following advantages:
- Allowing seamless wireless (e.g. bluetooth) communication with the permanent part 13 (here coring machine).
- Compact, i.e. not extending somewhere to hinder known ways of usage.
- Durable, and able to withstand the physical and environmental stresses associated with machining (here: drilling).
- Ensuring functioning of the sensor(s), e.g. such as any sensor for detecting wear and/or water flow-sensor should work for the drilling application.
- Easy to install (preferably without major changes in the manufacturing process of the core bit)

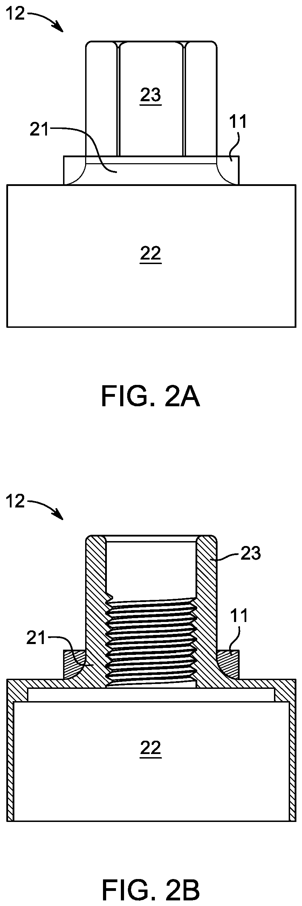

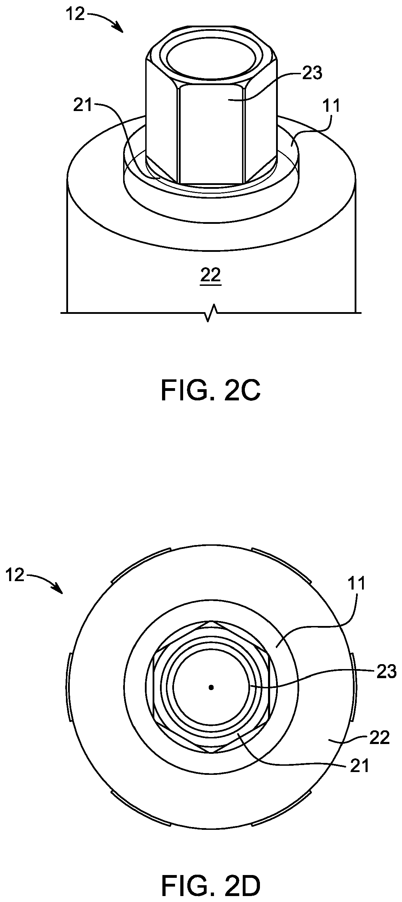

Fig. 2a-d illustrate a wearable part 12, in particular a core bit, comprising a sensor 11 in the transition part 21, between the barrel 22 and the shank 23.

A suitable position for a sensor device 11 on these core bits 12 could be around the transition part 21 between the barrel 22 to the shank 23. The sensor device 11 could be in a ring shape with a curvature in the inside, designed to fit loose or tight onto the transition part 21 and mountable over the shank 23.

Taking into consideration a maximum height of the sensor 11 would ensure that the sensor sits below the shank part 23 and therefore does not cause any limitation for the fixing process to the machine.

Advantageously, this design allows usage of common core bits without alteration. Wireless communication is not obstructed by parts of the core bit.

### Fig.3

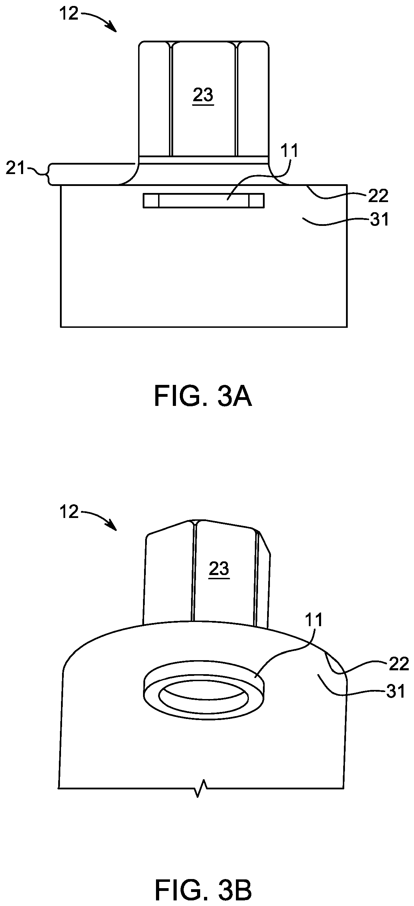

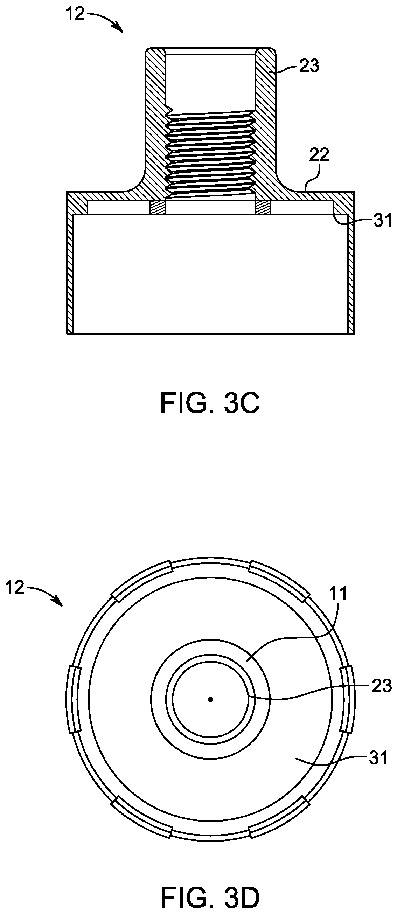

Figures 3a-d illustrate the sensor 11 positioned at the bottom 31 of the steel barrel 22 cover, i.e., inside the barrel 22. Such sensor 11 may be ring-shaped and embedded or attached upon manufacture of the core bits 12 or inserted through the opening with the internal thread and suitably attached. Advantageously, the drilling depth will be not limited by installing the device on the bottom part of the barrel.

Positioning the device inside the barrel might limit the wireless signal coverage. Options to overcome the limitations are:
- One or more devices / sensors (inside and outside),
- Hole penetrating the barrel for an antenna,
- Embedded solutions.

Advantageously, this design allows an easy installation, i.e. no major additional manufacturing step for the wearable part is necessary.

### Fig.4

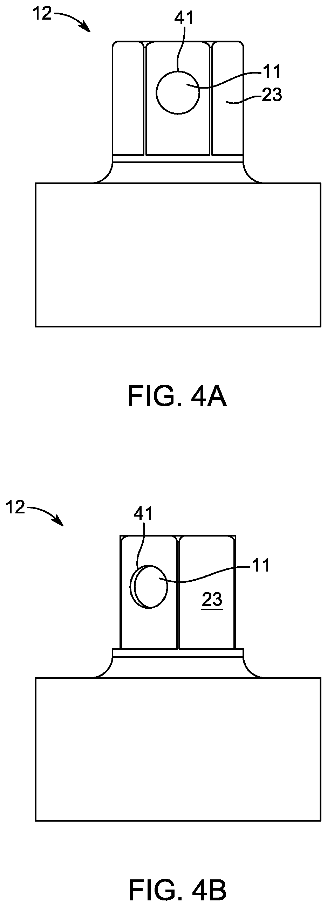

Figures 4a-e illustrate the sensor 11 embedded in the body of the wearable part 12, e.g., inside a cavity. Depicted is the sensor 11 embedded in the shank 23 of the core bit. In the depicted example, the sensor device could be in a flat, circular shape. Difficulties may arise at this position, because the shank is used for coupling/fixing the core bit to the coring machine and thus mechanically stressed or damaged by a wrench. As countermeasure, the surface of the sensor 11 may be less exposed/outside than the surface of the wearable part 12, so touching and damaging the sensor 11 will be more difficult. A cavity, able to support the sensor must be manufactured into the wearable part 12, e.g. by drilling a hole or blind hole 41 and inserting the sensor 11 into it.

Advantageously, the drilling depth will be not limited by installing the device on the bottom part of the barrel. Wireless connection is possible if the sensor surfaces the exterior.

### Fig.5

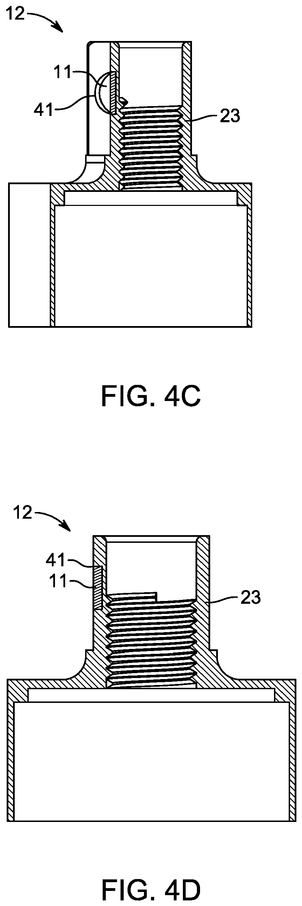

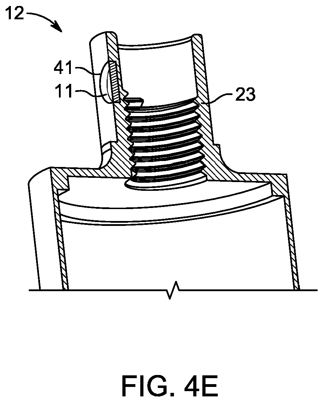

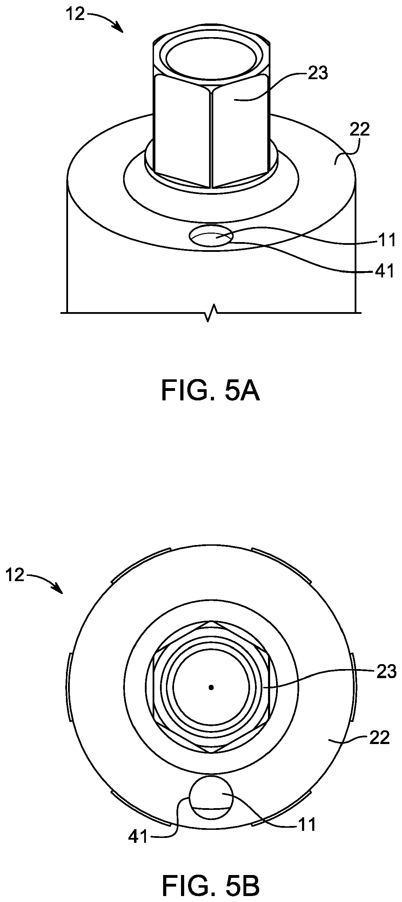

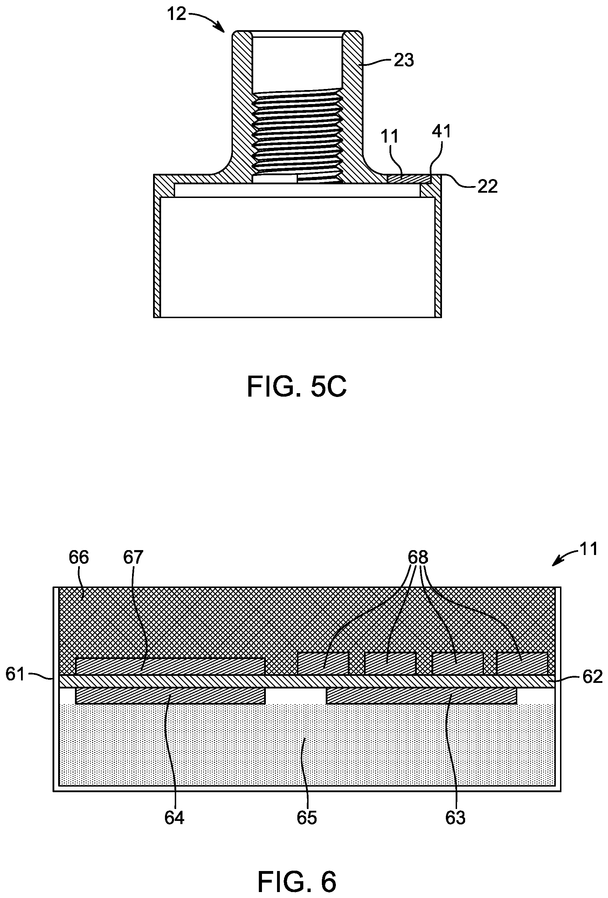

Figures 5a-c again, like Figure 4, illustrate the sensor 11 embedded in the body of the wearable part 12, e.g., inside a cavity. Depicted is the sensor 11 embedded in the top (cover) of the barrel 22 of the core bit. Accordingly, the features and advantages for the embodiment in Figures 4 apply.

In particular if the size of the core bit is small and space in the shank too limited, a location in the cover is another option. On the other hand, depending on the dimensions of the shank, some core bit diameters, e.g. below 52 mm do not have any top of the barrel 22 large enough to support a sensor 11. Bits of 62-72 mm have a very limited area.

Beyond the illustrated embodiments, other options are feasible:
- Outside or inside core bit barrel 22 wall, where is a lot of space but a part which is in continuous contact with the workpiece 14 (e.g. concrete) during drilling.
- Embedded in the core bit barrel 22, where is enough space but customized sensors may have to be manufactured to take the plurality of diameters of core bit barrels 22 into account. The sensor 11 in this embodiment is less exposed to the workpiece 14.
- Outside the shank, whereby the sensor is on top of the part, where the wrench may grip. Usually the wrench would harm the sensor. Alternatively a wrench designed to position the sensor 11 may be introduced.
- In the welding part from the segments to the barrel is just very little space for the sensor 11 and manufacturing processes for the core bit must be adapted. The segments are the part machining abrasive on the workpiece 14, like teeth. On the other hand, a sensor 11 measuring the wear of the wearable part 12 may be, thus, positioned at an advantageous spot for accurate measurement.

### Fig.6

Figure 6 illustrates a sensor 11, comprising:
- a housing 61, to protect the interior of the sensor, which optionally may be skipped to expose the energy harvesting mechanical part 65 for improved harvesting,
- a printed circuit board 62 or anything holding the components in place,
- a power module comprising a component or integrated circuit for energy harvesting 63, optional energy storage 64, and the mechanical energy harvesting element 65,
- a seal 66 protecting the components,
- a processing module, comprising a microcontroller 67, which optionally comprises a memory, antenna, transceiver and other components and sensor elements 68, measuring the physical parameters to be evaluated or sent/transferred.

It is possible to combine several components or elements into one module reduce the size of the electronic sensor device 11 and/or improve workability. This applies to Bluetooth Low Energy, integrated circuits, sensor elements 66 and energy storage 64.

The energy harvesting element 65 may be combined or included within the integrated circuit 63 and/or storage 64. The power module, which includes the above-mentioned items, may further comprise a control and error detection unit.

The energy harvesting element 65 may use one or a plurality out of different possibilities to gain energy, like:
- Vibration / Acoustics,
- Radio frequencies,
- Thermal energy / temperature differences,
- Electromechanical means.

A selection of a plurality of different sensor element 68 types may be included:
- speed or rotational speed (RPM),
- humidity / wetness,
- temperature,
- GPS,
- torque.

Instead of an energy harvesting unit, an ordinary battery might drive the system.

### Description of Embodiments

According to one embodiment, the wearable part's 12 sensor 11 sends data to the permanent part 13 of the tool system 10, enabling the permanent part to make informed decisions regarding the optimization and automatic adjustment of working parameters. Upon receiving data from the sensor, the permanent part analyzes and processes the information to determine the most suitable working parameters for the given machining conditions. This dynamic adjustment ensures enhanced performance, improved efficiency, and optimized machining results, tailored to the specific requirements of the workpiece and tool system.

In addition to the individual parameter measurements provided by the sensor 11, further advancements can be achieved through feature extraction across multiple measured parameters. For instance, by employing techniques such as artificial neural networks, the system can extract relevant features from the sensor data to gain deeper insights into the surface or workpiece conditions. This feature extraction process enables the system to correlate various parameters and e.g. may predict optimal torque adjustments based on the specific characteristics and conditions of the surface being machined by the core bit. By leveraging the power of advanced data analysis techniques, the tool system can continuously adapt and optimize parameter settings for improved machining performance and surface quality.

The utilization of data measured by the sensor 11 also opens up possibilities for optimizing the design and manufacturing processes of tools or the wearable part 12. By comparing and analyzing the data collected from similar surfaces or workpieces 14, valuable insights can be gained. For example, through comprehensive data analysis, patterns and trends during work may be identified, showing the relationship between different parameters and their impact on machining outcomes. These findings can guide the refinement of tool designs, leading to the development of more efficient and effective tools that are better suited to specific machining applications. By harnessing the power of data-driven optimization, the tool system can continuously learn and evolve, driving advancements in tool design and manufacturing practices.

The tool system 10 enables communication between the wearable part 12 and the permanent part 13, as well as potential interaction with a central instance 15, such as a cloud service. The integrated sensor 11 in the wearable part 12 can transmit data to the permanent part 13 or the central instance 15, facilitating information exchange and monitoring of the tool system's status. One potential use case is completeness detection, where the central instance 15 (or permanent part) verifies the availability of all necessary wearable parts and permanent parts required for a specific application. This communication capability ensures the tool system's components are complete and available for efficient operation in various industrial applications.

### Examples

Functional embodiments of methods for the use of the sensor device 11 or parameters to be measured are described in the following:

### Physical Unclonable Functions

The sensor device 11 should send data by means of physical unclonable functions to enable the permanent part 13, to detect, wether a OEM wearable part 12 is used or not.

In an amended form, the ratio of authentic vs non-authentic usage of wearable parts may be tracked or measured. It is assumed, that non-authentic wearable parts do not have an appropriate sensor enabling to authenticate any device.

One possible way might be to have pre-stored information (of what is considered as an authentic wearable part) on the memory of the sensor device.

For the example of a core bit: When the core bit is coupled with the coring machine and the information is transmitted, the machine can compare it to the stored information and determine whether it is an authentic or non-authentic core bit. This information can then be recorded and used to calculate the ratio of authentic vs non-authentic core bit usage.

Another way to identify authentic vs non-authentic wearable parts is to have a unique identifier (such as a serial number) pre-stored on each authentic core bit, which can be transmitted to the permanent part and recorded when used. The permanent part can then track which wearable parts have been used, and the ratio of authentic vs non-authentic wearable part usage can be calculated based on the recorded usage.

A fraudulent user may try to bypass that system, e.g. by initially coupling an authentic wearable part with the permanent part, but then replaces it with a non-authentic wearable part and works with it or operating the permanent part (I.e. machine) with a non-authentic wearable part but places an authentic wearable part in connection range (e.g. wireless connection range), while the authentic wearable part is not used during the work.

To ensure that a user does not bypass the system, the communication may be set up in a way, that information is sent in regular intervals from the sensor device to the permanent part, allowing it to monitor the usage of the authentic core bit. In addition, or alternatively, the information may be sent at particular moments, e.g. when coupling and decoupling, thus, preventing bypassing.

Information such as the number of cycles, duration of use, etc. may be sent in addition to allow continuous monitoring.

Optionally relevant for this purpose are PUF (Physical unclonable function), RFID (Passive and/or Active), BAP (Battery-Assisted Passive), NFC (Near Field Communication), Electronic Seals, Magnetic Stripes or Contact Chips.

The wearable part 12 of a tool system 10 is equipped with one or more sensors 11 for detecting various parameters during machining operations. As example, the wearable part can be a core bit, drilling bit, grinding disc, or any other wearable machine component 12. The following sections describe different sensing techniques for wear detection, water detection, measuring RPM (Revolutions Per Minute), acceleration, and torque. Often, the according physical parameters are measured by the sensor elements 68 which are part of the sensor device 11.

### Wear/Stress Detection

To detect wear of the wearable part's segments, surface, or edge, e.g., estimate a core bit's segment's current height, several sensing techniques can be employed.

Ultrasonic sensing involves using ultrasonic sensors, such as Time-of-Flight (TOF) sensors, Pulse-echo sensors, Through-beam sensors, or Dual-element sensors, to measure the height of the diamond segments. As the segments wear down, the sensor detects a decrease in height. Vibration sensing uses a vibration sensor to detect changes in vibration patterns as the segments wear down, including changes in frequency, amplitude, or other parameters. Temperature sensing involves using a temperature sensor to detect changes in temperature caused by increased friction between the wearable part and the material being machined. Eddy current sensing utilizes eddy current sensors to measure changes in electrical conductivity of the diamond segments, which are indicative of wear.

Similar measurements may be performed to detect stress of the material, in particular with short term or comparison measurements. This information allows also detection of misuse, i.e. tool usage out of specification range or a detection or prediction for necessary maintenance or replacement. If a misuse or product failure appeared is thus derivable from the data and improves complaint handling.

### Water Detection

Water detection in the tool system 10 can be achieved using various sensing techniques. One effective approach is conductive water detection, which involves applying a thin layer of conductive material, such as metal, to the sensor element 68 of the wearable part 12. This conductive layer is designed to monitor changes in electrical resistance when exposed to water. By measuring these changes, the sensor can accurately detect the presence of water during machining operations.

Another viable method is optical water detection, which utilizes a combination of a light source and a photodetector. The sensor is constructed by incorporating a transparent material, such as glass or plastic, into the wearable part. Light is directed through this material, and the presence of water alters the transmission of light. By analyzing the changes in light transmission, the sensor can effectively identify the presence of water in the vicinity.

Capacitive water detection presents an alternative approach. This technique involves the application of a thin insulating layer, known as a dielectric, between two conductive plates as sensor element 68 integrated into the wearable part 12. When water comes into contact with the sensor 11, the capacitance between the plates is altered. Monitoring changes in capacitance allows the sensor to accurately detect the presence of water.

Impedance water detection is another method that can be employed. This technique utilizes changes in impedance to detect the presence of water. By applying a frequency signal to a conductive material of a sensor element 68 integrated into the wearable part 12, the sensor 11 can monitor changes in impedance caused by the presence of water, providing reliable water detection capabilities.

Infrared water detection represents an additional option. This technique utilizes an infrared light source directed onto a material, such as metal, integrated into the wearable part. The sensor analyzes changes in infrared reflectance caused by the presence of water, thereby enabling accurate water detection.

Ultrasonic water detection offers an alternative sensing approach. This method involves emitting ultrasonic waves and analyzing their propagation characteristics. When water is present, the propagation of ultrasonic waves is altered, enabling the sensor to detect the presence of water in the tool system.

Further evaluation is required to determine the most suitable water detection sensor based on factors such as detection accuracy, integration feasibility, and commercial viability. Additionally, consideration should be given to whether the water detection sensor needs direct contact with the water or can operate in proximity to achieve accurate and reliable water detection.

### RPM Measurement

To measure RPM (rotational speed), different sensor options can be considered. Optical sensors utilize an LED light source and a phototransistor to detect markings on a rotating part, providing an electrical signal proportional to the speed of rotation. Hall-effect sensors generate a voltage proportional to speed by utilizing the magnetic field of a rotating part. Magnetic sensors use a permanent magnet and a reed switch or magnetic pickup coil to detect the passing magnetic field of a rotating part. Tachometer generators generate an electrical signal directly proportional to the speed of rotation, providing a direct measurement of RPM when used with an RPM meter.

### Acceleration Measurement

For acceleration measurement, several sensor types can be evaluated. MEMS accelerometers are compact and low-power devices that measure acceleration by sensing the movement of a small proof mass. Piezoelectric accelerometers utilize crystals that generate an electrical signal in response to mechanical stress. Capacitive accelerometers measure acceleration based on changes in capacitance between two plates. Optical accelerometers use light interference to measure acceleration with high accuracy.

### Torque Measurement

Different sensors can be considered for torque measurement. Rotary torque sensors measure the torque applied to a rotating shaft. Strain gauge torque sensors measure the deformation of a material in response to applied torque. Load cell torque sensors measure the force applied to a load cell and convert it to torque. Torque transducers are electronic devices that convert torque into an electrical signal.

The accuracy, integration feasibility, power consumption, and commercial feasibility of each sensing technique depends on different factors taken into account such as detection accuracy in millimeters, space requirements, power consumption compatibility to energy available.

## Claims

1. Tool system (10),
whereas the tool system comprises at first a wearable part, which is designed to machine a workpiece (14) and is exchanged when worn and at second a permanent part (13), which does not wear,
whereas
the wearable part of the tool system comprises a sensor being attachable to the wearable part of the tool system and comprising means to send data to a permanent part of a tool system,
**characterized in that**
the wearable part transmits authentication data to the permanent part for verification and the permanent part determines a ratio of the usage of authenticated and non-authenticated wearable part usage.

2. Tool system (10) according to claim 1,
**characterized in that**
the sensor (10) comprises means for enabling IoT capabilities in the wearable part.

3. Tool system (10) according to one of the previous claims,
**characterized in that**
the sensor (10) comprises an energy harvesting unit.

4. Tool system (10) according to claim 3,
**characterized in that**
energy is harvested from kinetic energy, vibrations or thermal sources present during tool system (10) operation.

5. Tool system (10) according to claim 4,
**characterized in that**
the sensor comprises a piezo electric element or electromagnetic inductor to harvest energy from vibrations.

6. Tool system (10) according to one of the previous claims,
**characterized in that**
the sensor has a ring or curved shape and is stiff or flexible with an adjustable diameter.

7. Tool system (10) according to one of the previous claims,
**characterized in that**
the permanent part of the tool system is a handheld electric tool.

8. Tool system (10) according to claim 7,
**characterized in that**
the wearable part is a drilling bit, core bit, grinding disc, saw blade or cutting tool.

9. Tool system (10) according to claim 8,
**characterized in that**
the wearable part is a core bit for drilling operations,
where the sensor is positioned either
- inside the barrel of the core bit,
- around the transition part of the core bit,
- in the shank,
- in the top (cover) of the barrel, or
- at the bottom of the steel barrel cover.

10. Method for transmitting data within a tool system (10) according to claim 7,
**characterized in that**
the data is saved in or measured by the sensor
and transmitted to the permanent part.

11. Method according to claim 10,
**characterized in that**
a central instance (15) verifies the availability and completeness of wearable parts and permanent parts required for a specific application.

12. Method according to one of claims 10 to 11,
**characterized in that**
the permanent part adjusts working parameters automatically, dependent on the data sent from the wearable part.

13. Method according to one of claims 10 to 12,
**characterized in that**
the permanent part tracks the duration of authenticated wearable part usage.

14. Method according to claim 13,
**characterized in that**
the determination is performed by periodically analyzing the data or upon coupling/decoupling of the wearable part.

15. Method according to one of claims 10 to 14,
**characterized in that**
the sensor detects at least one of the following:
- wear,
- stress,
- misuse,
- water contact or water flow,
- rotational speed, or
- (angular) velocity or acceleration.

## Patentansprüche

1. Werkzeugsystem (10), wobei das Werkzeugsystem zunächst ein Verschleißteil umfasst, das zur Bearbeitung eines Werkstücks (14) ausgelegt ist und bei Verschleiß ausgetauscht wird, und zweitens einen festen Teil (13), der nicht verschleißt,
wobei
das Verschleißteil des Werkzeugsystems einen Sensor umfasst, der an dem Verschleißteil des Werkzeugsystems anbringbar ist und Mittel zum Senden von Daten an den festen Teil eines Werkzeugsystems umfasst,
**dadurch gekennzeichnet, dass**
das Verschleißteil Authentifizierungsdaten zur Überprüfung an den festen Teil überträgt
und der feste Teil ein Verhältnis der Nutzung des authentifizierten und des nicht authentifizierten Verschleißteils bestimmt.

2. Werkzeugsystem (10) nach Anspruch 1,
**dadurch gekennzeichnet, dass**
der Sensor (10) Mittel zum Aktivieren von IoT-Fähigkeiten im Verschleißteil umfasst.

3. Werkzeugsystem (10) nach einem der vorherigen Ansprüche,
**dadurch gekennzeichnet, dass**
der Sensor (10) eine Energiegewinnungseinheit umfasst.

4. Werkzeugsystem (10) gemäß Anspruch 3,
**dadurch gekennzeichnet, dass**
Energie aus kinetischer Energie, Vibrationen oder thermischen Quellen gewonnen wird, die während des Betriebs des Werkzeugsystems (10) vorhanden sind.

5. Werkzeugsystem (10) gemäß Anspruch 4,
**dadurch gekennzeichnet, dass**
der Sensor ein piezoelektrisches Element oder einen elektromagnetischen Induktor umfasst, um Energie aus Vibrationen zu gewinnen.

6. Werkzeugsystem (10) nach einem der vorhergehenden Ansprüche,
**dadurch gekennzeichnet, dass**
der Sensor eine ringförmige oder gekrümmte Form aufweist und steif oder flexibel ist und einen einstellbaren Durchmesser hat.

7. Werkzeugsystem (10) nach einem der vorhergehenden Ansprüche,
**dadurch gekennzeichnet, dass**
der feste Teil des Werkzeugsystems ein handgeführtes Elektrowerkzeug ist.

8. Werkzeugsystem (10) nach Anspruch 7,
**dadurch gekennzeichnet, dass**
das Verschleißteil ein Bohrmeißel, ein Kernbohrer, eine Schleifscheibe, ein Sägeblatt oder ein Schneidwerkzeug ist.

9. Werkzeugsystem (10) nach Anspruch 8,
**dadurch gekennzeichnet, dass** das Verschleißteil ein Kernbohrer für Bohrvorgänge ist,
wobei der Sensor entweder
- innerhalb des Laufs des Kernbohrers,
- um den Übergangsbereich des Kernbohrers herum,
- im Schaft,
- in der Oberseite (Abdeckung) des Bohrrohres oder
- an der Unterseite der Stahlrohr-Abdeckung angeordnet ist.

10. Verfahren zur Datenübertragung innerhalb eines Werkzeugsystems (10) gemäß Anspruch 7,
**dadurch gekennzeichnet, dass**
die Daten im Sensor gespeichert oder von diesem gemessen
und an den festen Teil übertragen werden.

11. Verfahren nach Anspruch 10,
**dadurch gekennzeichnet, dass**
eine zentrale Instanz (15) die Verfügbarkeit und Vollständigkeit der für eine bestimmte Anwendung erforderlichen Verschleißteile und festen Teile überprüft.

12. Verfahren nach einem der Ansprüche 10 bis 11,
**dadurch gekennzeichnet, dass**
der feste Teil die Arbeitsparameter automatisch in Abhängigkeit von den vom Verschleißteil gesendeten Daten anpasst.

13. Verfahren nach einem der Ansprüche 10 bis 12,
**dadurch gekennzeichnet, dass**
der feste Teil die Dauer der authentifizierten Nutzung des Verschleißteils verfolgt.

14. Verfahren nach Anspruch 13,
**dadurch gekennzeichnet, dass**
die Bestimmung durch periodische Analyse der Daten oder beim An- und Abkoppeln des Verschleißteils erfolgt.

15. Verfahren nach einem der Ansprüche 10 bis 14,
**dadurch gekennzeichnet, dass**
der Sensor mindestens eines der folgenden Merkmale erfasst:
- Verschleiß,
- Belastung,
- Missbrauch,
- Wasserkontakt oder Wasserfluss,
- Drehzahl oder
- (Winkel-)Geschwindigkeit oder Beschleunigung.

## Revendications

1. Système d'outils (10),
le système d'outils comprenant d'une part une partie portable, qui est conçue pour usiner une pièce (14) et qui est remplacée lorsqu'elle est usée, et d'autre part une partie permanente (13), qui ne s'use pas,
tandis que
la partie usable du système d'outils comprend un capteur pouvant être fixé à la partie usable du système d'outils et comprenant des moyens pour envoyer des données à une partie permanente d'un système d'outils,
**caractérisé en ce que**
la partie usable transmet des données d'authentification à la partie permanente à des fins de vérification
et la partie permanente détermine un ratio d'utilisation de la partie usable authentifiée et non authentifiée.

2. Système d'outils (10) selon la revendication 1,
**caractérisé en ce que**
le capteur (10) comprend des moyens pour activer les capacités IoT dans la partie usurable.

3. Système d'outils (10) selon l'une des revendications précédentes, **caractérisé en ce que**
le capteur (10) comprend une unité de récupération d'énergie.

4. Système d'outils (10) selon la revendication 3,
**caractérisé en ce que**
l'énergie est récupérée à partir de l'énergie cinétique, des vibrations ou des sources thermiques présentes pendant le fonctionnement du système d'outils (10).

5. Système d'outils (10) selon la revendication 4,
**caractérisé en ce que**
le capteur comprend un élément piézoélectrique ou un inducteur électromagnétique pour récupérer l'énergie provenant des vibrations.

6. Système d'outil (10) selon l'une des revendications précédentes, **caractérisé en ce que**
le capteur a une forme annulaire ou incurvée et est rigide ou flexible avec un diamètre réglable.

7. Système d'outil (10) selon l'une des revendications précédentes, **caractérisé en ce que**
la partie permanente du système d'outil est un outil électrique portatif.

8. Système d'outils (10) selon la revendication 7,
**caractérisé en ce que**
la partie portable est un foret, une mèche, un disque abrasif, une lame de scie ou un outil de coupe.

9. Système d'outils (10) selon la revendication 8,
**caractérisé en ce que**
la partie usable est une mèche pour les opérations de forage,
où le capteur est positionné soit
- à l'intérieur du cylindre de la mèche,
- autour de la partie de transition de la mèche,
- dans la tige,
- dans la partie supérieure (couvercle) du cylindre, ou
- au fond du couvercle en acier du cylindre.

10. Procédé de transmission de données dans un système d'outils (10) selon la revendication 7,
**caractérisé en ce que**
les données sont enregistrées ou mesurées par le capteur
et transmises à la partie permanente.

11. Procédé selon la revendication 10, **caractérisé en ce que** une instance centrale (15) vérifie la disponibilité et l'intégralité des pièces d'usure et des pièces permanentes requises pour une application spécifique.

12. Procédé selon l'une des revendications 10 à 11,
**caractérisé en ce que**
la partie permanente ajuste automatiquement les paramètres de fonctionnement en fonction des données envoyées par la partie portable.

13. Procédé selon l'une des revendications 10 à 12,
**caractérisé en ce que**
la partie permanente suit la durée d'utilisation authentifiée de la partie portable.

14. Procédé selon la revendication 13,
**caractérisé en ce que**
la détermination est effectuée en analysant périodiquement les données ou lors du couplage/découplage de la partie portable.

15. Procédé selon l'une des revendications 10 à 14,
**caractérisé en ce que**
le capteur détecte au moins l'un des éléments suivants :
- l'usure,
- la contrainte,
- la mauvaise utilisation,
- le contact avec l'eau ou l'écoulement d'eau,
- la vitesse de rotation, ou
- la vitesse (angulaire) ou l'accélération.
